# EUROPEAN PATENT SPECIFICATION

(11) **EP 3 259 988 B1**
(45) Date of publication and mention of the grant of the patent: **08.05.2019**
(21) Application number: 17175168.8
(22) Date of filing: 09.06.2017
(51) Int. Cl.: A01N 25/34, A01N 43/16, A01N 25/04

(54) **NEW AGGLOMERATE RODENTICIDE COMPOSITIONS**
NEUE AGGLOMERAT-RODENTIZIDZUSAMMENSETZUNGEN
NOUVELLES COMPOSITIONS D'AGGLOMÉRATS RODENTICIDES

(30) Priority: 23.06.2016 IT UA20164617
(43) Date of publication of application: 27.12.2017
(73) Proprietor: DR TEZZA S.R.L., 37050 Angiari (VR) (IT)
(72) Inventor: TEZZA, Pierluigi, 37050 Angiari (Verona) (IT)
(74) Representative: Petruzziello, Aldo

(56) References cited:
- EP-A1- 0 088 051
- WO-A1-2013/110962
- WO-A1-2014/064272
- WO-A1-2015/132054
- GB-A- 1 243 565

## Description

The present invention relates to a particular family of baits to be used in the control of infestant animals such as rats, mice and others, said baits having high attractiveness for rodents, good hardness and low toxicity for humans and other non-target animal species.

Moreover the present invention relates to a particular method for preparing, in a simple and fast manner, agglomerate rodenticide baits (without wax, solid paraffins) in any form, such as pellets, fresh paste, with the use of aqueous solutions.

Additionally, the present invention relates to the use of particular biodegradable compounds, such as for example polycaprolactone, as binder of the active ingredient contained in said baits so as to obtain biodegradable yet resistant baits, also when they are in the form of microcaps, caps, gel or other forms, and not only fresh paste, said microcaps, caps and gels being particularly sensitive to environmental conditions, in particular humidity and temperature which lead, in addition to the loss of the physical form, also to the degradation of the active ingredients contained therein.

Moreover a new way is provided here of producing the baits in the abovementioned forms by means of the use of 3D printers: this allows baits to be obtained easily and fast in any form as preferred, fully aware that rodents suffer from neophobia and therefore new solid forms introduced into their environment can arouse suspicion in the population of the rodents themselves which will avoid contact with these forms. The possibility of making baits in forms which can recall figures and objects already present in the habitat goes to lower the risks of neophobia.

Currently the population of mice is growing all over the world and so also the problems linked to this increase.

The presence of mice in urban areas is the cause of hygiene and health risks, damage to human installations and disease.

Over the years many systems such as traps, electronic devices and chemical products, have been developed for combating mice.

In relation to chemical products, it is common practice to use rodenticide formulations with high palatability to reduce the number of rodents present in a given environment.

These rodenticide formulations are available on the market in the form of paste, so-called fresh paste, pellets, paraffin blocks, gel, microcaps, or caps.

All these formulations contain agents pleasing to the palate such as cereals, flour, natural or artificial sweetening substances, vegetable oils, animal fats, fruit, fish, meat, powdered milk, flavourings, colorants, to increase palatability, as well as preservatives and stabilising agents.

In fact, in order to obtain good results in the control of the infestant population, the baits must have high attractiveness so as to ensure high and therefore effective intake.

In addition to these agents, most of the formulations contain a poison with effect after ingestion within 24-48 hours to avoid any alert for other mice.

For mice and rats, the chemical products most used are poisons which act on the blood or on the nervous system.

Very widespread as poisons are anticoagulant agents belonging to the family of the hydroxycoumarins such as warfarin, bromadiolone, brodifacoum and difenacoum, or to the family of indandiones such as chlorophacinone and diphacinone.

These anticoagulant active ingredients, which are liposoluble, are dissolved in an appropriate solvent which serves as a carrier for them in the formulation and to allow them to be distributed well in the mixture.

However, the actual use of substances very different one from the other entails problems connected to poor stability, including dimensional, of the bait itself and of the poison in said formulations.

It is for this reason that, in addition to the palatable substances, a binder of the ingredients of the mixture is also used so as to be able to produce dimensionally stable physical forms.

Rodents generally have the need to gnaw due to their incisors which grow in continuation and therefore their natural behaviour is that of gnawing hard materials to keep these incisor teeth short.

Conventional rodenticide formulations in the form of waxy blocks and fresh paste do not have sufficient hardness in order to meet the natural need of the mouse to gnaw.

This is due also to the fact that the choice of the components of the formulation depends a great deal on the consistency of the form in which the bait is to be marketed (blocks, fresh paste, caps) and therefore it is not always possible to choose palatable components and/or binders which are also able to provide good hardness and "gnawability" of the bait.

GB 1243565 describes a rodenticide composition containing a rodenticide compound and a binder formed by a polymer such as polymers of cellulose, for examples cellulose acetate phthalate, cellulose acetate maleate, cellulose propionate or vinyl polymers.

These formulations suffer from the disadvantage of having a poor stability in adverse environmental conditions, particularly as concerns humidity and temperature, which lead to the disaggregation of the form and the degradation of the active ingredients contained therein.

Moreover this document does not describe the physical forms in which the compositions can be formed nor even less so the relative physical stability of the form and of the active ingredient.

Additionally, this document does not give any information as to the extent of the secondary toxicity of the relative formulations for humans and other non-target animal species.

EP0088051 describes a hard rodenticide bait in block form which provides as binder an aqueous solution of polyvinyl acetate or of a copolymer of vinyl acetate and ester of acrylic acid, ester of methacrylic acid and/or acrylonitrile, said block being obtained by casting or shaping semi-liquid mixtures containing the aqueous dispersions of the aforesaid polymer and subsequent drying of the same.

However the use of the abovementioned polymers as binders is disadvantageous in that they have to be dissolved in water or other solvent in order to be mixed with the other components in a homogeneous manner, therefore entailing the need to resort to a subsequent costly phase of drying the mixture in order to obtain the rodenticide baits in the form of blocks.

It is to be noted in fact that water is a great "enemy" of many active ingredients which, specifically in the presence of water, decompose. Moreover, generally the active ingredients used are highly lipophilic and therefore the presence is required of a strong emulsifying agent which generally demonstrates repulsive effects on the target. The alternative use of solvents also has the problem of repulsiveness as well as possible environmental "pollution" due to the solvents which may still be present as residues.

EP0088051 moreover does not disclose whether the compositions can be used also for preparing baits of other forms different from blocks such as pellets, fresh paste, microcaps, caps and gels.

Additionally, this document does not give any information as to the extent of the secondary toxicity of the relative formulations for humans and other non-target animal species, nor even less so the physical stability of the form and of the active ingredient.

The object of the present invention is that of overcoming, at least in part, the disadvantages of the prior art by providing a composition for bait which is homogeneous, understood as an eco-compatible product and highly palatable, with an adequate hardness so as to satisfy the natural need of the mouse to gnaw.

A further object is that of providing such a composition which also has high stability, both dimensional and chemical, and low secondary toxicity so as to provide minimum contamination for the user and the non-target animal species.

Yet another object is that of providing such a composition which is easy to prepare, without resorting to complex apparatuses, and which can be made in various forms such as fresh paste, pellets, paraffin blocks, gel, microcaps, or caps.

Another object again is that of providing such a composition as defined above which can also be prepared without having to resort to costly phases of drying of the mixture in order to be able to obtain the rodenticide baits in the required form.

These and other objects are achieved by the rodenticide composition according to the invention having the features listed in the appended independent claim 1.

Advantageous embodiments of the invention are disclosed by the dependent claims.

An object of the present invention relates to an agglomerated composition for rodenticide bait, in solid form or in a form similar to paste, with high chemical/physical stability and hardness, both in warm and cold environments, comprising
- at least one granular ingredient which is palatable for rodents, in powder and/or in grain form, preferably comprising cereals, in grain form or flours;
- one or more rodenticide poisons; and, in a mixture with the other ingredients,
- a binder able to give a defined physical form and also protect the liposoluble active ingredient, stabilising it, said binder being chosen from among polylactic acid, copolymers of polylactic acid and glycolic acid, polycaprolactone (PCL), taken singly or combinations thereof, preferably PCL.

The above-mentioned polymers are generally biodegradable and bio-assimilable thermoplastic polymers having a melting point not higher than 90°C.

Particularly preferred as binder for the present composition is polycaprolactone thanks to its lower melting point and its high lipophilicity, which also is a common characteristic of many poisons.

The polycaprolactone (PCL) is a polymer prepared for polymerisation by means of the opening of the ring of the ε-caprolactone, a cyclic monomer known as early as the 1930s. PCL is a semi-crystalline hydrophobic polymer: its crystallinity grows as the molecular weight grows, it has a glass transition temperature (Tg) of -60°C and a melting point which varies from 59 to 64°C.

The number average molecular weight of the PCL suitable for being used in the present composition may vary preferably between 3,000 and 80,000 g/mol.

PCL also has good solubility in organic solvents and moreover has a good compatibility of mixing and blending with the other components of the conventional baits and, at ambient temperature, around 20°C, it shows high hardness and mechanical strength.

Moreover the PCL is biodegraded by external organisms such as bacteria and fungi while it is not biodegraded by the human or animal body due to the lack of the appropriate degradation enzymes.

The Applicant has in fact found that the use of polycaprolactone (PCL), or of the similar polymers defined above, as binder in a mixture with the other conventional ingredients of rodenticide formulations, allows to obtain a palatable bait, which is biodegradable, with solid consistency or with adequate hardness if in paste form, and which does not need either the use of packaging or protective external coverings, nor the use of waxes when the formulation is in block form.

This was an unexpected result in that as far as the Applicant is aware polycaprolactone and the other similar polymers defined above have never been used in the preparation of rodenticide baits.

More particularly it was unexpected that the polycaprolactone and the other similar polymers defined above are able to be a palatable component and at the same time a binder for the typical ingredients of rodenticide baits known in the art, as well as being able to provide a good hardness and "gnawability" for the corresponding bait.

Even more particularly, the polycaprolactone has been found to be able to bind the ingredients even when it is in low quantities, generally around from 5 to 15% by weight out of the total formulation without the addition of other co-formulants apart from the palatable part, in addition to stabilising the poisons used in said formulations.

It should be noted that said polycaprolactone is not a soluble polymer even if in the presence of hot water (from 50°C upwards) its consistency becomes soft.

Moreover the lower melting temperature of the polycaprolactone, and of the other similar polymers defined above, means that they soften already at temperatures around 37°C, assuming a consistency similar to chewing gum. This is advantageous in that it encourages the rodent towards prolonged chewing of the bait, entailing improved absorption of the poison.

The content of cereals (whether as seeds or flour) in the present formulation is preferably at least 5% by weight of the composition, more preferably at least 15% by weight of the total composition, and also 30% when a very hard and resistant form is to be obtained. It is in any case possible to formulate the binder with a sweetening substance (acting as palatable ingredient) in addition to the poison.

As cereals mention can be made, for example, of corn, oats, rice, both in the form of edible seeds and of flours.

In one embodiment of the present invention the rodenticide composition is formed by grains (e.g. corn, barley, sunflower seeds and the like), a rodenticide poison and polycaprolactone (PCL).

In the present formulation it is preferable to use, in addition to the cereals, also at least one second palatable component in that the use of cereals as single palatable ingredients may hinder absorption of the poisonous substances due to the husk that covers the seed, considerably reducing therefore the efficacy of the bait.

As palatable ingredients, in addition to the cereals, mention can be made of starch, vegetable fats, sugar or other sweeteners, vegetable oils, animal fats, fruit, fish, meat, powdered milk.

Moreover, as palatable ingredients, use can also be made of flours such as flour of turmeric, of ginger, of cocoa bean which further increase palatability.
It is preferable that the total quantity of palatable ingredients is at least 30% by weight of the total composition.

The rodenticide poison can be selected from among natural anticoagulant substances, substances that improve the absorption of calcium, and combinations thereof.

Moreover said poison can also be added with substances that act as stabilisers, preservatives, substances with low synergic effect such as EDTA and sodium citrate and antioxidant preservatives with similar effect such as ascorbic acid and ascorbyl palmitate. The various formulations can contain the abovementioned preservatives, stabilisers (e.g. calcium hydroxide), stabilisers of the pH in variable proportions, generally 2-3% as total sum.

More particularly the rodenticide poison which can be used in the present bait can be chosen from among natural products such as scilliroside, strychnine and their vegetable derivatives, chemical products such as sodium fluoracetate, fluoroacetamide, crimidine, zinc phosphide, norbormide and its derivatives, alphachloralose, thallium sulfate, antu.

The abovementioned poisons can be used, if permitted by current legislation, as an emergency measure when the disinfestation has to be achieved in the shortest time possible.

Other poisons which can be used in the present formulation are the so-called AVK (anti vitamin K) belonging both to the families of coumarin and indandione of first generation, and to the families of second generation and more effective of coumarin (bromadiolone, brodifacoum, difenacoum, flocoumafen) and thiacremonone (diphetialone).

More particularly, as poisons anticoagulant substances are preferred and the substances which improve the absorption of calcium.

As anticoagulant substances mention can be made, for example, of derivatives of indandione, such as chlorophacinone, diphacinone, pindone and derivatives of coumarin such as warfarin, difenacoum, coumachlor, brodifacoum, flocoumafen, bromadiolone and diphetialone.

As substances which improve the absorption of calcium mention can be made of calciferol, ergocalciferol or others similar of vitamin D.

The overall quantity of rodenticide poison which can be used in the present bait is the quantity generally used in known baits, according to the rodent species for which it is intended and in any case, in general, the one governed by current laws and regulations.

Typically said poison is used in quantities comprised between 5ppm and 500ppm.

The poison incorporated in the present bait can be acute or a single dose of product, or critical or multi-dose, without thereby departing from the scope of the present invention.

In the present invention, poison also refers to the mixture of two or more poisons mentioned above.

Given its hardness, the bait containing PCL according to the invention, or the other polymers indicated above, exhibits low secondary toxicity for humans and other animal species in that PCL and the other polymers indicated above release the poison very slowly, if the bait is not gnawed.

Another advantage is that PCL has not required the use of other conventional added binders such as fats, waxes or paraffins, which can reduce the palatability of the bait, making possible to have a greater content of cereals in the present baits with respect to conventional baits.

Moreover the use of PCL as substitute for fats, waxes or paraffins, makes the bait more stable in water.

Therefore the present composition can be in the form of blocks without waxes.

Moreover the blocks without waxes of the present invention are highly palatable to rodents, in particular to rats, and have adequate hardness and high stability even when the content of binder is low, for example around 5%, a condition which cannot be achieved with the same quantity of the binders known in the art.

It should be noted that to date polymeric binders have mainly been used to create an outer coating of the formulations so as to protect them from the external environment and maintain the dimensional stability of the form.

In the present composition for bait, the binder, in particular PCL, is present in a quantity from 1 to 98% by weight, preferably from 1 to 25%, and more preferably from 1 to 10% by weight, a percentage particularly suitable for formulations based on grains alone (corn, barley, sunflower seeds).

Moreover the aforementioned binder can be used both for baits in pellets and for baits in fresh paste. The fresh paste has to be balanced in hardness by varying the content of binder and the temperature of preparation of the same.

In whatsoever form the bait is presented, the present binder is able to protect and stabilise the poison.

The present composition for bait can contain optionally further ingredients and/or additives conventionally used in known baits, in particular one or more of the following components
- a modifier of crystallisation of the polymer, capable also of modifying the actual consistency of the bait; and/or
- a bittering agent to prevent accidental ingestions; and/or
- an agent repellent to other species; and/or
- an agent attractive to rodents; and/or
- an agent that improves bio-availability of the poison; and/or
- preservatives and technological coadiuvants.

When a modifier of crystallisation of the polymer is present, which is capable also of modifying the actual consistency of the bait, the bait of the present invention has, moreover, the capacity to regulate the speed of absorption in order to regulate the release of the poison.

Examples of modifiers of crystallisation are glycols (e.g. mono propylene glycol), recycled cellulose, collagen and other polymers.

The bittering agent that can be used in the present bait can be a natural or synthetic substance. As bittering agent able to discourage other species from swallowing the abovementioned bait, mention can be made of denatonium benzoate, denatonium saccharate, extracts of unripe apple, quinine, quinones and phenols, quassin, brucine, bitter aloe and octyl acetate of saccharose.

Examples of repellent agents that can be used in the present bait are 2,4,6-trichlorophenol, amyl acetate, derivatives of cyannamide and alkyl isothiocyanate.

As attractive agent any sweetener substance can be used, such as for example saccharose, fructose, saccharine or also turmeric, ginger.

As agent for improving the bio-availability mention can be made of di- or tri- glycerides.

The bait that is the object of the present disclosure can be easily prepared, preferably by operating according to the following method, even if other methods known in the art could be used without thereby departing from the scope of protection of the present invention.

The binder (whether granular or molten), the poison and the other different ingredients are added to the palatable material, which is generally presented in granular or powder form, so as to form a "compound" which can be subjected to forming, moulding, extrusion, also using machines for moulding plastic materials, or to printing with 3D printer, preferably 3D printing, to obtain blocks, pellets, paste, microcaps, caps, gel or other forms.

As appears evident, the abovementioned process does not need long and costly phases of drying of the forms obtained.

The use of common 3D printers, for example by means of extrusion, powder bed technologies, FDM, SLS or LOM, allows to obtain baits having any shape and size, without having to use costly equipment such as extruders or tablet presses.

With 3D printers it is also possible to obtain pellets and gnawable paste using the technology of extrusion also with specific additives.

It is also to be noted that the poison can be dissolved in the melted polymer (poison inside the polymer) or can be added after having moderately lowered the temperature of the mixture of the polymer+palatable components (poison outside of the polymer) or can be simultaneously present both in the polymer and outside of the polymer.

The bait according to the present invention can be in the form of block without wax, pellets, fresh paste, (e.g. chewable, or crunchy, etc.) microcaps, caps, gel or other forms.

More particularly, it is preferable that the present composition is in the form of bait of agglomerated cereals, in the form of hard and non-dispersible block (understood as a block of physical dimensions similar to the other formulations present on the market, both those known as pellets and the so-called paraffin blocks).

It is a characteristic of rodents that of having separate mechanisms of chewing. This is because in the mouth of the rodent there is a gap, called diastema, between the gnawing teeth (incisors) and the actual chewing teeth (molars).

When they gnaw, rodents habitually succeed in dividing what is gnawed, in the first part of the mouth, using their incisor teeth thanks to taste receptors on their tongues, using the diastema between incisors and molars.

Therefore the rodents are able to gnaw products which are extremely unpleasant in order to reach food materials which are palatable.

Therefore, in the present invention, the bait is made with such a consistency and hardness as to activate only the gnawing mechanism of the rodents, obtaining complete eating of the bait: in practice, the bait made with the present composition can be too hard to be chewed by other animals and therefore the active ingredient is retained in the polymer matrix and thus it is not assimilated. Only gnawing the bait finely and chewing it with actual molars leads to good absorption of the poison contained in the bait.

In other words, the bio-availability of the poison is very low because the present binder, in particular the PCL, releases the poison very slowly, if the bait is not gnawed: the effect on the organism which does not gnaw is practically undetectable and this is very important in order to avoid accidental poisoning of other species.

Therefore the present bait has reduced toxicity on the organisms which do not succeed in gnawing it finely.

The use of the PCL, and of the other polymers defined above, as binders for rodenticide baits thus entails a combination of advantages which can be summed up in this way:
- printability of the composition with 3D printers so as to be able to obtain baits in forms which otherwise cannot be obtained, which can recall figures and objects already present in the habitat, thus lowering the risks of neophobia of the rodents species;
- greater eco-compatibility of the bait with respect to those known in that the active ingredient is restrained inside the polymer and is degraded by micro-organisms generally present in the environment;
- high palatability, also in the case of blocks, in that the PCL, and the other polymers defined above, do not disturb the palatability of the remaining components, unlike the waxes of the paraffin blocks;
- greater stability, also dimensional, of the physical forms of the formulations in humid/aqueous environments, thanks to the low solubility of the present binder in water;
- capacity to provide the bait with a high hardness and "gnawability", at the beginning, such as to be appreciated by the rodents but not by other animals and, subsequently, to provide a softer consistency similar to chewing gum such as to favour prolonged chewing, increasing in this way the absorption of the poison and the efficacy of the same;
- lower bio-availability of the poison with respect to known baits because, if the bait is intact and not gnawed, the present binder releases the poison very slowly, resulting in this way in a bait of low secondary toxicity both for the user and for the non-target animal species.

Moreover, thanks to the fact that the present binder does not have to be dissolved in water in order to be mixed with the other components, degradation can be avoided of those rodenticide active ingredients that are ephemeral and which degrade fast in contact with water when the pH moves towards acidity.

The following are some examples illustrating the present invention.

In the following examples "bromadiolone and/or difenacoum and/or brodifacoum" refer to a solution generally in mono propylene glycol, with pH stabilised to about 8: these solutions are appropriate also for the other substances to which the present invention refers.

The item "preservatives" is also understood to cover the pH modifiers described previously.

### EXAMPLES

### Example 1: Hard block without waxes

| | |
|---|---|
| Poison (Bromadiolone and/or difenacoum and/or brodifacoum) | 0.0010 - 0.0050% |
| Cereals | q.s. to 100% |
| PCL | 12.00% |
| Sweeteners (saccharose, saccharine) | 1.00% |
| Mono propylene glycol | 1.00% |
| Preservatives | 2.00% |
| Denatonium benzoate | 0.001% |

### Example 2: Hard block without waxes (chewable)

| | |
|---|---|
| Poison (Bromadiolone and/or difenacoum and/or brodifacoum) | 0.0010 - 0.0050 % |
| Cereals | q.s. to 100% |
| PCL | 11.00% |
| Vegetable flours | 5.00% |
| Sweeteners | 1.00% |
| Mono propylene glycol | 4.00% |
| Preservatives | 2.00% |
| Denatonium benzoate | 0.001% |

### Example 3: Pellets and other hard form

| | |
|---|---|
| Poison (Bromadiolone and/or difenacoum and/or brodifacoum) | 0.0010 - 0.0050% |
| Vegetable flours | 85.50% |
| PCL | 10.00% |
| Sweeteners | 1.00% |
| Mono propylene glycol | 1.00% |
| Calcium hydroxide (stabilising) | 0.50% |
| Preservatives | 2.00% |
| Denatonium benzoate | 0.001% |

### Example 4: Fresh paste (chewable)

| | |
|---|---|
| Poison (Bromadiolone and/or difenacoum and/or brodifacoum) | 0.0010 - 0.0050% |
| Vegetable flours | 49.00% |
| PCL | 10.00% |
| Mono propylene glycol | 1.00% |
| Palatable substances | 11.00% |
| Vegetable fat | 14.50% |
| Sweeteners | 10.00% |
| Calcium hydroxide (stabilising) | 0.50% |
| Preservatives | 3.00% |
| Denatonium benzoate | 0.001% |

### Example 5 Fresh paste (with crunchy parts)

| | |
|---|---|
| Poison (Bromadiolone and/or difenacoum and/or brodifacoum) | 0.0010 - 0.0050% |
| PCL | 5.00% |
| Cereals | 15.00% |
| Vegetable flours | 34.00% |
| Mono propylene glycol | 1.00% |
| Palatable substances | 11.00% |
| Vegetable fat | 14.50% |
| Sweeteners | 10.00% |
| Calcium hydroxide (stabilising) | 0.50% |
| Preservatives | 3.00% |
| Denatonium benzoate | 0.001% |

### Example 6: Compound printable on 3D printers

| | |
|---|---|
| Poison (Bromadiolone and/or difenacoum and/or brodifacoum) | 0.0010 - 0.0050 % |
| PCL | 10.00% |
| Vegetable flours | 66.00% |
| Mono propylene glycol | 1.00% |
| Palatable substances | 11.00% |
| Sweeteners | 10.00% |
| Preservatives | 3.00% |
| Denatonium benzoate | 0.001% |

### EXAMPLES OF STABILITY

The formulations according to the invention were subjected to a series of tests to assess the dimensional and/or chemical stability thereof in various environmental conditions, comparing them with some commercial formulations subjected to the same tests.

The tests performed were the following:
- test of dimensional stability both at a temperature of 40°C and humidity higher than 80%, assessed after given time intervals (*Dimensional stability at 40°C and relative humidity higher than 80%);*
- analysis of the content of active ingredient before and after the dimensional stability tests (*Analysis of the active ingredient*);
- accelerated ageing test according to the OECD methods at 54°C, relative humidity of 50%, for 14 days (*Accelerated ageing*);
- water resistance test, by immersing the baits in tap water and in rainwater at 15°C *(Resistance to water).*

### Example 7: Stability of paraffin blocks

A bait in block form according to the invention having the formulation of example 1 (with difenacoum 0.005 g), in the cylindrical form with dimensions of 3.5 x 3 cm, was subjected to tests as described here below, as well as the commercial shaped rectangular paraffin block BONIRAT FORABLOCK (25 g - difenacoum 0.005 g) from PEST NET Italia, obtaining the following results.

### Dimensional stability at 40°C and relative humidity higher than 80%

a) the commercial bait was placed in a black tray of plastic material, obtaining the following results:
   - after 24 hours in these conditions the bait tends to lose the physical shape, pouring in the tray and causing the grain contained to migrate on the surface;
   - after 48 hours the grain tends to swell due to the humidity;
   - after 72 hours the bait has a semi-liquid consistency.
   Conclusion: this commercial bait cannot be used outside of trays and in warm and humid environments, as drains and warm spaces generally are.
b) the bait of the present invention, subjected to the same test, does not undergo any deformation in time, and after 72 hours can be handled without problems. Moreover, even placed in environmental conditions of 20°C and relative humidity below 50%, after 24 hours it is hard, with unchanged shape.

### Analysis of the active ingredient:

The results of analysis on the active ingredient (specifically a second-generation anticoagulant) contained in the commercial bait have shown a considerable drop in the active ingredient content from the initial 50-55 ppm to the 32 ppm of active ingredient contained in the paraffin bait after the test.

The results of analysis on the active ingredient contained in the bait of the present invention do not show any drop in active ingredient: from the initial 51 ppm the active ingredient, after the tests, is found to be 49 ppm, where the slight difference is due to the analysis variables. Moreover the physical dimensions and the shape and hardness of the bait of the invention are maintained.

### Accelerated ageing:

The commercial bait in paraffin block has shown a complete deformation and drop in the active ingredient from the initial 53 ppm to 42 ppm; the bait of the invention instead does not show any deformation and loss of the active ingredient as described above as regards the analysis of the active ingredient.

### Example 8: Stability of the pellets

A bait in pellet form according to the invention having the formulation of example 3 (with brodifacoum 0.005 g) was subjected to a serious of tests as described here below, as well as the commercial pellet bait BRODITOP PELLET (pellets contained in bag weighing 25 g - brodifacoum 0.005 g) from PEST NET Italia, with dimensions of the single pellet of 4 mm x 10 mm approximately, obtaining the following results.

### Resistance to water:

a) The commercial bait in pellet form, light blue in colour, is immersed in tap water and in rainwater at 15°C: after 6 hours the pellet loses totally the physical shape and is turned into a fine light blue powder which stays on the bottom of the test receptacle;
b) the bait according to the invention immersed in tap water and in rainwater at 15°C: after 6 hours does not show any deformation and can be recovered from the water in order to ascertain the hardness and the unchanged shape thereof.

### Analysis of the active ingredient:

The results of analysis on the active ingredient (specifically a second-generation anticoagulant) contained in the commercial bait have shown a considerable drop in the active ingredient content from the initial 50-55 ppm to the 6 ppm of active ingredient contained in the solid recovered from the water and the result shows the almost total loss of the active ingredient.

The results of analysis on the active ingredient contained in the bait of the present invention do not show any drop in active ingredient: from the initial 51 ppm the active ingredient, after the tests, is found to be 49 ppm, where the slight difference is due to the analysis variables. Moreover the physical dimensions and the shape and hardness of the bait of the invention are maintained.

### Accelerated ageing:

The commercial bait in pellet form has shown that the active ingredient drops from 52 ppm to 37 ppm while the physical shape of the bait in pellet form is maintained.

The results of analysis on the active ingredient contained in the bait of the present invention do not show any drop in active ingredient content: from the initial 51 ppm the active ingredient, after the tests, is found to be 49 ppm, where the slight difference is due to the analysis variables. Moreover the physical dimensions and the shape and hardness of the bait of the invention are maintained.

### Example 9: Stability of the pastes

A bait in fresh paste form according to the invention, having the formulation of example 5 (with difenacoum 0.005 g), was subjected to a series of tests described here below, as well as the commercial bait in fresh paste form BONITOP (difenacoum 0.005 g) from PEST NET Italia, packaged in tea paper sachet having a weight approximately of 15 g and size approximately 6.5 cm x 7.0 cm, obtaining the following results.

### Dimensional stability at 40°C and relative humidity higher than 80%

a) the commercial bait was placed on a stainless steel tray: after 24 hours in these conditions the bait shows the oily and fatty matter, slightly coloured, leaked out from the tea paper, and the weight drops to 18 g;
b) the bait of the present invention, subjected to the same test, does not undergo any deformation in time, and can be handled without problems.

### Resistance to water:

a) the abovementioned commercial bait is placed into water and after 24 hours the water is coloured, the bait is completely disaggregated and swollen inside its packaging and the weight of the bait rises to 25 g;
b) the bait of the present invention, subjected to the same test, does not undergo any deformation in time, and can be handled without problems.

### Analysis of the active ingredient:

The results of analysis on the active ingredient (specifically a second-generation anticoagulant) contained in the commercial bait have shown a considerable drop in the active ingredient content from the initial 50-55 ppm to 8 ppm, after having recovered the solid by pressing the sachet, and the oily part present on the tea paper shows 14 ppm of active ingredient.

The analysis results on the active ingredient contained in the bait of the present invention do not show any drop in active ingredient content: after the tests the active ingredient content is found to be 49 ppm from the initial 51 ppm, where the slight difference is due to the analysis variables.

### Accelerated ageing:

The commercial bait in fresh paste form has shown a loss of the oily part, formation of unpleasant odour and drop in active ingredient content from 55 ppm to 26 ppm, including the analysis both of the paper wrapping and the dispersed oily part.

The bait of the present invention does not show any drop in active ingredient: after the tests, the active ingredient is found to be 49 ppm from the initial 51 ppm, a slight difference due to the analysis variables. Moreover the physical dimensions, the shape and hardness are preserved.

In conclusion, the bait according to the invention has undoubted advantages for the user with respect to known baits: it can easily be recovered, if necessary, at the end of the disinfestation campaign since the bait does not disaggregate and retains a stable physical shape.

Moreover, leaving it in use, something which is strongly not recommended, it conserves in any case its efficacy and the safety which is guaranteed by the hardness which prevents breakage thereof by children or pets.

## Claims

1. Agglomerated composition for rodenticide bait, in solid form or similar to paste, said composition comprising
- at least one ingredient which is palatable for rodents, in powder and/or in grain form;
- one or more rodenticide poisons; and, in a mixture with the other ingredients,
- a biodegradable and bio-assimilable binder, in granular form or in molten form, chosen from among polylactic acid, copolymers of polylactic acid and glycolic acid, polycaprolactone (PCL), or combination thereof.

2. Agglomerated composition according to claim 1, wherein said at least one ingredient which is palatable for rodents comprises cereals, in grain form or flours.

3. Composition according to claim 1 or 2, wherein the total quantity of palatable ingredients is at least 15% by weight of the total composition, or at least 30% when a very hard and resistant form is to be obtained.

4. Composition according to any one of the preceding claims 2-3, wherein one or more palatable substances for rodents are present in addition to the cereals.

5. Composition according to any one of the preceding claims, wherein the rodenticide poison(s) is(are) selected from natural substances, anticoagulant substances, substances that improve the absorption of calcium, and combinations thereof.

6. Composition according to any one of the preceding claims, wherein the rodenticide poison(s) is(are) present in quantities comprised between 5ppm to 500ppm.

7. Composition according to any one of the preceding claims, wherein the binder is present in a quantity from 1 to 98% by weight.

8. Composition according to any one of the preceding claims, further comprising a modifier of crystallisation of the polymeric binder.

9. Composition according to any one of the preceding claims, in the form of block, pellets, fresh paste including chewable, crunchy paste; microcaps, caps, gel or other forms.

10. Process for preparing the composition as defined in any one of the preceding claims, comprising the step of
adding to the palatable material the binder, in granular or molten form, the poison and the other ingredients so as to form a "compound",
forming, moulding, extrusion, also with machines for moulding plastic materials, or printing with 3D printer of said "compound", to obtain blocks, pellets, paste, microcaps, caps, gel or other forms of rodenticide baits.

11. Agglomerated composition for rodenticide bait according to claim 1, wherein said composition is derived from a composition printable by means of 3D printers.

12. Agglomerated composition for rodenticide bait according to claim 1, wherein the biodegradable and bio-assimilable binder is polycaprolactone (PCL).

13. Composition according to claim 4, wherein the one or more palatable substances for rodents, in addition to the cereals, are selected from flour, vegetable flours, starch, vegetable fats, sugar or other sweeteners, vegetable oils, animal fats, fruit, fish, meat, milk powder, flour of turmeric, of ginger, of cocoa bean.

14. Composition according to claim 8, wherein the modifier of crystallisation of the polymeric binder is selected from among glycols including mono propylene glycol, recycled cellulose, collagen and other polymers.

15. Process according to claim 10, wherein the blocks, pellets, paste, microcaps, caps, gel or other forms of rodenticide baits are obtained by printing the "compound" with 3D printer.

## Patentansprüche

1. Agglomerierte Zusammensetzung für Rodentizidköder in fester Form oder ähnlich einer Paste, wobei die Zusammensetzung Folgendes umfasst
- mindestens einen Bestandteil, der für Nagetiere schmackhaft ist, in Pulver- und/oder in Körnerform;
- ein oder mehrere Rodentizidgifte;
und, in einer Mischung mit den anderen Bestandteilen,
- ein biologisch abbaubares und biologisch assimilierbares Bindemittel in granuläre Form oder in geschmolzener Form, das unter Polymilchsäure, Copolymeren von Polymilchsäure und Glykolsäure, Polycaprolacton (PCL) oder Kombinationen davon ausgewählt wird.

2. Agglomerierte Zusammensetzung nach Anspruch 1, wobei der mindestens eine Bestandteil, der für Nagetiere schmackhaft ist, Cerealien in Kornform oder Mehlen umfasst.

3. Zusammensetzung nach Anspruch 1 oder 2, wobei die Gesamtmenge an schmackhaften Bestandteilen mindestens 15 Gew.-% der gesamten Zusammensetzung oder mindestens 30 % beträgt, wenn eine sehr harte und resistente Form erhalten werden soll.

4. Zusammensetzung nach irgendeinem der vorhergehenden Ansprüche 2-3, wobei eine oder mehrere schmackhafte Substanzen für Nagetiere zusätzlich zu den Cerealien vorliegen.

5. Zusammensetzung nach irgendeinem der vorhergehenden Ansprüche, wobei das Rodentizidgift/die Rodentizidgifte unter natürlichen Substanzen, Antikoagulanssubstanzen, Substanzen, die die Absorption von Calcium verbessern und Kombinationen davon ausgewählt werden.

6. Zusammensetzung nach irgendeinem der vorhergehenden Ansprüche, wobei das Rodentizidgift/die Rodentizidgifte in Mengen vorliegt/vorliegen, die zwischen 5 ppm und 500 ppm liegen.

7. Zusammensetzung nach irgendeinem der vorhergehenden Ansprüche, wobei das Bindemittel in einer Menge von 1 bis 98 Gew.-% vorliegt.

8. Zusammensetzung nach irgendeinem der vorhergehenden Ansprüche, ferner ein Modifiziermittel der Kristallisation des polymeren Bindemittels umfassend.

9. Zusammensetzung nach irgendeinem der vorhergehenden Ansprüche in Form von Blöcken, Granulaten, frischer Paste einschließlich kaubarer, knuspriger Paste; Mikrokappen, Kappen, Gel oder anderen Formen.

10. Verfahren für die Herstellung der Zusammensetzung wie in irgendeinem der vorhergehenden Ansprüche definiert, umfassend den Schritt des
Zusetzens, zu dem schmackhaften Material, des Bindemittels in granuläre oder geschmolzener Form, des Giftes und der anderen Bestandteile, um eine "Verbindung" zu bilden,
Bildens, Formens, Extrudierens, auch mit Maschinen zum Formen von plastischen Materialien oder Druckens mit einem 3D-Drucker der "Verbindung", um Blöcke, Granulate, Paste, Mikrokappen, Kappen, Gel oder andere Formen von Rodentizidködern zu erhalten.

11. Agglomerierte Zusammensetzung für Rodentizidköder nach Anspruch 1, wobei die Zusammensetzung von einer Zusammensetzung abgeleitet wird, die durch 3D-Drucker druckbar ist.

12. Agglomerierte Zusammensetzung für Rodentizidköder nach Anspruch 1, wobei das biologisch abbaubare und biologisch assimilierbare Bindemittel Polycaprolacton (PCL) ist.

13. Zusammensetzung nach Anspruch 4, wobei die eine oder mehreren schmackhaften Substanzen für Nagetiere zusätzlich zu den Cerealien unter Mehl, Pflanzenmehlen, Stärke, Pflanzenfetten, Zucker oder anderen Süßungsmitteln, Pflanzenölen, tierischen Fetten, Obst, Fisch, Fleisch, Milchpulver, Kurkuma- oder Ingwer- oder Kakaobohnenmehl ausgewählt werden.

14. Zusammensetzung nach Anspruch 8, wobei das Modifiziermittel der Kristallisation des polymeren Bindemittels unter Glykolen, einschließlich Monopropylenglykol, rückgeführter Cellulose, Kollagen und anderen Polymere ausgewählt wird.

15. Verfahren nach Anspruch 10, wobei die Blöcke, Granulate, Paste, Mikrokappen, Kappen, Gel oder andere Formen von Rodentizidködem durch Drucken der "Verbindung" mit 3D-Drucker erhalten werden.

## Revendications

1. Composition agglomérée pour appât rodenticide, sous forme solide ou similaire à une pâte, ladite composition comprenant
- au moins un ingrédient qui est appétissant pour les rongeurs, sous forme de poudre et/ou de graines ;
- un ou plusieurs poisons rodenticides ;
et, dans un mélange avec les autres ingrédients,
- un liant biodégradable et bio-assimilable, sous forme granulaire ou sous forme fondue, choisi parmi l'acide polylactique, les copolymères d'acide polylactique et d'acide glycolique, la polycaprolactone (PCL) ou leurs combinaisons.

2. Composition agglomérée selon la revendication 1, dans laquelle ledit au moins un ingrédient qui est appétissant pour les rongeurs comprend des céréales, sous forme de graines ou de farines.

3. Composition selon la revendication 1 ou 2, dans laquelle la quantité totale d'ingrédients appétissants est d'au moins 15 % en poids de la composition totale, ou d'au moins 30 % quand une forme très dure et résistante doit être obtenue.

4. Composition selon l'une quelconque des revendications 2 à 3 précédentes, dans laquelle une ou plusieurs substances appétissantes pour rongeurs sont présentes en plus des céréales.

5. Composition selon l'une quelconque des revendications précédentes, dans laquelle le(es) poison(s) rodenticide(s) est(sont) choisi(s) parmi les substances naturelles, les substances anticoagulantes, les substances qui améliorent l'absorption du calcium et leurs combinaisons.

6. Composition selon l'une quelconque des revendications précédentes, dans laquelle le(les) poison(s) rodenticide(s) est(sont) présent(s) en quantités comprises entre 5 ppm et 500 ppm.

7. Composition selon l'une quelconque des revendications précédentes, dans laquelle le liant est présent en une quantité de 1 à 98 % en poids.

8. Composition selon l'une quelconque des revendications précédentes, comprenant en outre un modificateur de cristallisation du liant polymère.

9. Composition selon l'une quelconque des revendications précédentes, sous forme de bloc, de comprimés, de pâte fraîche comprenant une pâte croustillante, masticable ; des microcapsules, des capsules, un gel ou d'autres formes.

10. Procédé de préparation de la composition telle que définie dans l'une quelconque des revendications précédentes, comprenant l'étape de
addition à la matière appétissante du liant, sous forme granulaire ou fondue, du poison et des autres ingrédients de manière à former un « composé »,
formation, moulage, extrusion, aussi avec des machines pour mouler les matières plastiques, ou impression avec une imprimante 3D dudit « composé », pour obtenir des blocs, des comprimés, une pâte, des microcapsules, des capsules, un gel ou d'autres formes d'appâts rodenticides.

11. Composition agglomérée pour appât rodenticide selon la revendication 1, dans laquelle ladite composition est dérivée d'une composition imprimable au moyen d'imprimantes 3D.

12. Composition agglomérée pour appât rodenticide selon la revendication 1, dans laquelle le liant biodégradable et bio-assimilable est la polycaprolactone (PCL).

13. Composition selon la revendication 4, dans laquelle les une ou plusieurs substances appétissantes pour rongeurs, en plus des céréales, sont choisies parmi la farine, les farines végétales, l'amidon, les graisses végétales, le sucre ou d'autres édulcorants, les huiles végétales, les graisses animales, un fruit, le poisson, la viande, la poudre de lait, la farine de curcuma, de gingembre ou de graine de cacao.

14. Composition selon la revendication 8, dans laquelle le modificateur de cristallisation du liant polymère est choisi parmi les glycols comprenant le mono propylène glycol, la cellulose recyclée, le collagène et d'autres polymères.

15. Procédé selon la revendication 10, dans lequel les blocs, comprimés, pâte, microcapsules, capsules, gel ou d'autres formes d'appâts rodenticides sont obtenus en imprimant le « composé » avec une imprimante 3D.
